# EUROPEAN PATENT APPLICATION

(11) **EP 4 622 289 A1**
(43) Date of publication of application: **24.09.2025**
(21) Application number: 24810298.0
(22) Date of filing: 16.05.2024
(51) Int. Cl.: H04R 1/08, H04R 1/10, H04M 1/02

(54) **TERMINAL DEVICE**

(30) Priority: 19.05.2023 CN 202310573597
(71) Applicant: Huawei Technologies Co., Ltd., Shenzhen, Guangdong 518129 (CN)
(72) Inventor: FU, Danwen, Shenzhen, Guangdong 518129 (CN); GUO, Qingfeng, Shenzhen, Guangdong 518129 (CN); SUN, Wei, Shenzhen, Guangdong 518129 (CN); LI, Peng, Shenzhen, Guangdong 518129 (CN)
(74) Representative: Isarpatent
(86) International application number: PCT/CN2024/093730
(87) International publication number: WO 2024/240052

(57) **Abstract**

This application relates to the field of terminal technologies, and in particular, to a terminal device. The terminal device includes a middle frame, a display screen, and a sound pickup module. The middle frame is provided with a first sound pickup channel; the first sound pickup channel runs through the middle frame in a thickness direction of the middle frame; the first sound pickup channel has a first port facing the display screen and a second port facing the sound pickup module; an outer surface of the terminal device includes a first sound pickup hole, and the first sound pickup hole is in communication with the first sound pickup channel; the display screen is sealingly connected to the middle frame by a first sealing assembly to seal the first port of the sound pickup channel; and the sound pickup module is sealingly connected to the middle frame by a second sealing assembly, and the second sealing assembly communicates a second sound pickup hole of the sound pickup module with the second port of the first sound pickup channel. The first sound pickup channel of the terminal device can adapt to a light and thin middle frame, and can further ensure good sealing and audio quality.

## Description

### CROSS-REFERENCE TO RELATED APPLICATIONS

This application claims priority to Chinese Patent Application No. 202310573597.8, filed with the China National Intellectual Property Administration on May 19, 2023 and entitled "TERMINAL DEVICE", which is incorporated herein by reference in its entirety.

### TECHNICAL FIELD

This application relates to the field of terminal technologies, and in particular, to a terminal device.

### BACKGROUND

A sound pickup apparatus is disposed in a terminal device with a sound reception function. The terminal device is provided with a sound pickup channel to introduce an external sound to be acquired by the sound pickup apparatus. To ensure good sound reception and recording effect, the sound pickup channel usually needs to be sealed.

In the conventional technology, a sound pickup channel is usually formed on a middle frame of a terminal device, and the middle frame requires a specific thickness to meet a sealing requirement of the sound pickup channel. However, with development of the terminal device toward thinning, the middle frame is thinned, which cannot meet the sealing requirement and an audio quality requirement of the sound pickup channel. In other words, the conventional implementation of the sound pickup channel is incompatible with a light and thin middle frame, which poses a new challenge to a design of the terminal device.

### SUMMARY

This application provides a terminal device. A first sound pickup channel of the terminal device can adapt to a light and thin middle frame, and can further ensure good sealing and audio quality.

According to a first aspect, this application provides a terminal device. The terminal device has a sound recording function. Specifically, the terminal device includes a middle frame, a display screen, and a sound pickup module. The display screen and the sound pickup module are disposed respectively on both sides of the middle frame in a thickness direction of the terminal device. The thickness direction of the terminal device is also a thickness direction of the middle frame. The middle frame is provided with a first sound pickup channel, and the first sound pickup channel runs through the middle frame in the thickness direction of the middle frame. The first sound pickup channel has a first port facing the display screen and a second port facing the sound pickup module. The first port is located on a surface that is of the middle frame and that faces the display screen. The second port is located on a surface that is of the middle frame and that faces away from the sound pickup module. The terminal device further includes a first sealing assembly and a second sealing assembly. The display screen is sealingly connected to the middle frame by the first sealing assembly to seal the first port of the first sound pickup channel. The sound pickup module is sealingly connected to the middle frame by the second sealing assembly, and the second sealing assembly can communicate a second sound pickup hole of the sound pickup module with the second port of the first sound pickup channel. To introduce an external sound into the terminal device, an outer surface of the terminal device includes a first sound pickup hole, and the first sound pickup hole is in communication with the first sound pickup channel. Specifically, the first sound pickup hole may be provided on a circumferential surface of the middle frame. When the terminal device implements a sound recording function, an external sound enters the first sound pickup channel through the first sound pickup hole, and is then guided to the second sound pickup hole of the sound pickup module to be acquired by the sound pickup module.

In the terminal device, the first sound pickup channel can guide an external sound to the sound pickup module. The first sound pickup channel is sealed by sealing the display screen and the middle frame and sealing the sound pickup module and the middle frame, ensuring sealing of the first sound pickup channel. An audio quality requirement can be met during sound introduction. Based on a structure and a sealing manner of the first sound pickup channel, a thickness of the middle frame can be smaller, and more space can be reserved for assembly of components of the terminal device, facilitating miniaturization development of the terminal device.

In a possible implementation, the second sealing assembly includes a structural member, a first sealing member, and a second sealing member. The structural member is provided with a sound guiding hole. The structural member is sealingly connected to the middle frame by the first sealing member, the first sealing member is provided with a first communicating hole, and the first communicating hole may communicate the sound guiding hole with the second port of the first sound pickup channel. In addition, the structural member is sealingly connected to the sound pickup module by the second sealing member, the second sealing member is provided with a second communicating hole, and the second communicating hole may communicate the sound guiding hole with the second sound pickup hole of the sound pickup module. The first sealing member may be an adhesive, and the second sealing member may be an elastic sealing ring. A side that is of the structural member and that faces the middle frame may be bonded and connected to the middle frame by the first sealing member. A side that is of the structural member and that faces the sound pickup module may be sealingly connected by the elastic sealing member. The elastic sealing member may be connected between the structural member and the sound pickup module in a compressed state, so that both ends of the elastic sealing ring in a thickness direction respectively abut against the structural member and the sound pickup module, to achieve good sealing effect. The elastic sealing member can further provide specific impact buffering effect. When the terminal device is impacted, the elastic sealing member can absorb an impact wave, achieving specific protective effect on the sound pickup module. A material of the structural member is a metal. The structural member may be specifically a steel sheet, providing specific strength and support for a thin middle frame. A material of the elastic sealing ring may be silica gel, foam, rubber, or the like.

An orthographic projection of an outer edge of the first sealing member on the middle frame surrounds the second port of the first sound pickup channel, to ensure that the structural member and the middle frame can be sealed around the second port.

To implement communication of a sound channel, in the thickness direction of the terminal device, an orthographic projection of the first communicating hole on the middle frame and the second port of the first sound pickup channel at least partially overlap, so that the first sound pickup channel can be in communication with the first communicating hole. An orthographic projection of the second communicating hole on the sound pickup module covers the second sound pickup hole of the sound pickup module, which can ensure that a sound introduced into the terminal device can fully reach the second sound pickup hole. An orthographic projection of the sound guiding hole on the first sealing member and the first communicating hole at least partially overlap, and an orthographic projection of the sound guiding hole on the second sealing member and the second communicating hole at least partially overlap, so that the first sound pickup channel can be in communication with the second sound pickup hole of the sound pickup module. A cross-sectional area of the second port of the first sound pickup channel is greater than a cross-sectional area of the second sound pickup hole of the sound pickup module, so that an external sound can fully reach the second sound pickup hole to be acquired by the sound pickup module.

An orthographic projection of an outer edge of the first sealing assembly on the middle frame surrounds the first port of the first sound pickup channel, so that the first sealing assembly can sealingly connect the display screen to the middle frame. Specifically, the first sealing assembly may be an adhesive, so that the display screen can be bonded to the middle frame by using the adhesive, and close the first port of the first sound pickup channel.

In a possible implementation, a recess structure is formed on a side that is of the middle frame and that faces away from the display screen. A recess opening of the recess structure is located on a surface that is of the middle frame and that faces away from the display screen. A distance between a recess bottom of the recess structure and the middle frame facing the display screen is less than a thickness of the middle frame. In other words, a part that is of the middle frame and that corresponds to the recess bottom of the recess structure has a small thickness. The sound pickup module may be disposed in the recess structure, saving space occupied by the sound pickup module in the thickness direction of the terminal device, and reserving larger mounting space for another component of the terminal device. The second port of the first sound pickup channel is at least partially located in the recess structure, facilitating communication between the first sound pickup channel and the second sound pickup hole of the sound pickup module. Specifically, the second port of the first sound pickup channel may be located at the recess bottom of the recess structure.

To match the recess structure, the second sealing assembly includes a first sealing portion and a second sealing portion. Specifically, the first sealing group is located on a side that is of the recess bottom of the recess structure and that faces the sound pickup module, and the second sealing group is located on a side that faces the sound pickup module and that is of a recess wall that is of the recess structure and that is close to the first sound pickup hole, so that the second sealing assembly can provide a good sealing communication function between the middle frame and the sound pickup module.

In a possible implementation, the middle frame is provided with a second sound pickup channel, and the second sound pickup channel communicates the first sound pickup channel with the first sound pickup hole, to guide a sound entering the first sound pickup hole to the first sound pickup channel. Herein, the second sound pickup channel may be formed on the middle frame, and the middle frame may provide sealing for the second sound pickup channel.

Specifically, the second sound pickup channel includes a first channel segment and a second channel segment, and the second channel segment is connected between the first channel segment and the first sound pickup hole. Because the first sound pickup channel runs through the middle frame along the thickness of the middle frame, the first channel segment is provided obliquely to communicate the first sound pickup channel with the second channel segment.

In a possible implementation, the sound pickup module includes a microphone and a circuit board. The circuit board is fastened to the middle frame, the microphone is disposed on a side that is of the circuit board and that faces away from the middle frame, and the microphone may be electrically connected to a mainboard of the terminal device through the circuit board. The microphone converts an audio signal into an electrical signal and transmits the electrical signal to the mainboard. The circuit board is provided with a via hole, and the second sound pickup hole on the microphone may be in communication with the first sound pickup channel through the via hole, facilitating transmission of a sound in the first sound pickup channel to the second sound pickup hole to be acquired by the microphone.

### BRIEF DESCRIPTION OF DRAWINGS

FIG. 1 is a diagram of a structure of a terminal device according to an embodiment of this application;
FIG. 2 is a diagram of a structure of a part of a terminal device according to an embodiment of this application;
FIG. 3 is a diagram of a structure of a part of a terminal device according to an embodiment of this application;
FIG. 4a is a diagram of a structure of a part of a terminal device according to an embodiment of this application;
FIG. 4b is an exploded view of a structure of a part of a terminal device according to an embodiment of this application;
FIG. 4c is a sectional view of a structure of a part of a terminal device according to an embodiment of this application;
FIG. 5a is a diagram of a structure of a middle frame of a terminal device according to an embodiment of this application;
FIG. 5b is a diagram of a structure of a middle frame of a terminal device according to an embodiment of this application;
FIG. 6a is a diagram of a structure of a middle frame of a terminal device according to an embodiment of this application;
FIG. 6b is a sectional view of a structure of a middle frame of a terminal device according to an embodiment of this application;
FIG. 7a is a diagram of a structure of a connection between a middle frame and a first sealing assembly of a terminal device according to an embodiment of this application;
FIG. 7b is a diagram of a structure of a connection between a middle frame and a first sealing member of a terminal device according to an embodiment of this application;
FIG. 7c is a diagram of a structure of a middle frame and a second sealing assembly of a terminal device according to an embodiment of this application;
FIG. 8 is a diagram of a structure of a circuit board and a second sealing member of a terminal device according to an embodiment of this application;
FIG. 9a is a diagram of a structure of a terminal device according to an embodiment of this application;
FIG. 9b is an enlarged view at M in FIG. 9a; and
FIG. 9c is a sectional view of a structure of a part of a terminal device according to an embodiment of this application.

Reference numerals: 10: Terminal device; 1: Middle frame; 101: First structural portion; 102: Second structural portion; 103: Third structural portion; 11: First sound pickup channel; 111: Flange; 12: Second sound pickup channel; 121: First channel segment; 122: Second channel segment; 2: Display screen; 3: Sound pickup module; 31: Microphone; 32: Circuit board; 321: First via hole; 4: First sealing assembly; 41: Second via hole; 5: Second sealing assembly; 51: Structural member; 511: Sound guiding hole; 52: First sealing member; 5201: Bottom portion; 5202: Side portion; 521: First communicating hole; 53: Second sealing member; 531: Second communicating hole; 6: Mainboard; 7: Rear cover.

### DESCRIPTION OF EMBODIMENTS

Sound reception and recording are a common function of a current terminal device, and can help the terminal device implement operations such as voice recording and voice calling. Specifically, a sound pickup module may be built in the terminal device, and an external sound may be transmitted to the sound pickup module through a sound pickup channel to be received and recorded by the sound pickup module. The sound pickup channel is usually formed on a middle frame of the terminal device. To maintain good audio effect, the sound pickup channel needs to be sealed. In this case, the middle frame needs to meet a specific thickness requirement to form the sound pickup channel. With development of a terminal device toward thinning, a thickness of a middle frame is gradually reduced. A conventional structure of a sound pickup channel cannot be implemented on a thinned middle frame.

Based on the foregoing problem, an embodiment of this application provides a terminal device. According to the terminal device, an implementation of a sound pickup channel in cooperation with a thin middle frame is provided, so that both audio effect and compatibility with the thin middle frame can be achieved. The terminal device includes but is not limited to a handheld device, an on-board device, a wearable device, and another device with sound recording, such as a cellular phone (cellular phone), a smartphone (smartphone), a personal digital assistant (personal digital assistant, PDA) computer, a tablet computer, an on-board computer, a smartwatch (smart watch), a smart wristband (smart wristband), and another terminal device with a sound recording function.

To make the objectives, technical solutions, and advantages of this application clearer, the following further describes this application in detail with reference to the accompanying drawings.

Terms used in the following embodiments are merely intended to describe specific embodiments, but are not intended to limit this application. As used in this specification and the appended claims of this application, singular expression forms "one", "a", and "this" are also intended to include expression forms such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

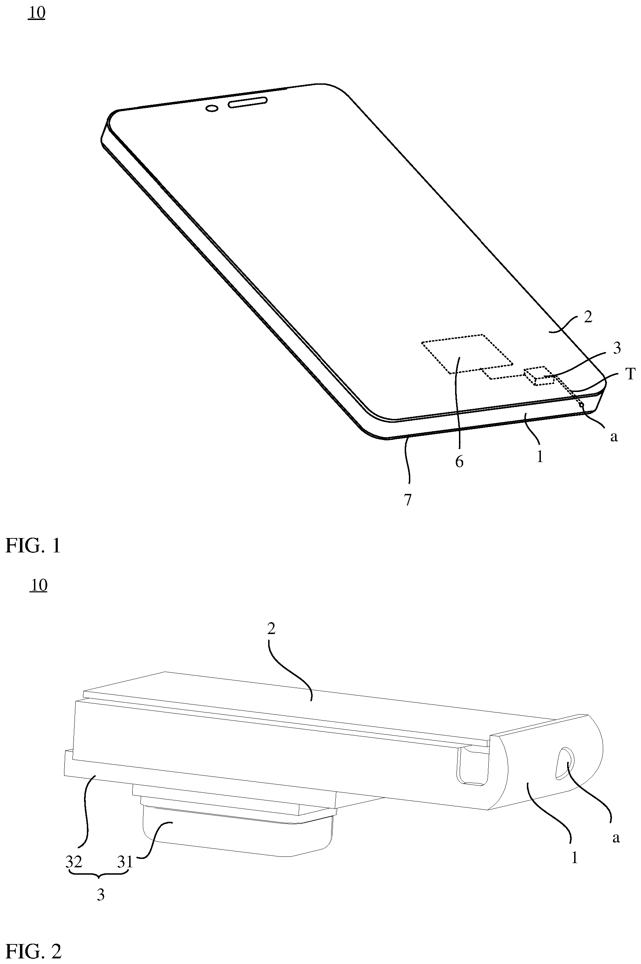

FIG. 1 shows a terminal device 10. For example, the terminal device 10 herein is a mobile phone. The terminal device 10 includes a middle frame 1, a display screen 2, a sound pickup module 3, a mainboard 6, and a rear cover 7. In a thickness direction of the terminal device 10, the display screen 2 and the rear cover 7 are disposed respectively on both sides of the middle frame 1, and the sound pickup module 3 and the mainboard 6 are disposed between the display screen 2 and the rear cover 7. The sound pickup module 3 is electrically connected to the mainboard 6. The sound pickup module 3 is configured to acquire a sound, convert a sound signal into an electrical signal, and transmit the electrical signal to the mainboard 6. The mainboard 6 may process the electrical signal of the sound. To facilitate conduction of an external sound to the sound pickup module 3, an outer surface of the middle frame 1 is provided with a first sound pickup hole a, and the terminal device 10 is provided with a sound communicating structure T that communicates the first sound pickup hole a with the sound pickup module 3. Herein, the middle frame 1 is located between the display screen 2 and the rear cover 7, and the outer surface of the middle frame 1 is circumferentially connected between an edge of the display screen 2 and an edge of the rear cover 7. It may also be considered that the outer surface of the middle frame 1 is a side surface of the terminal device 10.

FIG. 2 shows a structure of a part of the terminal device 10. The display screen 2 and the sound pickup module 3 are disposed respectively on both sides of the middle frame 1 in the thickness direction of the terminal device 10. It should be understood that, with reference to the structures of the terminal device 10 shown in FIG. 1 and FIG. 2, the sound pickup module 3 is specifically located between the middle frame 1 and the rear cover 7. The sound pickup module 3 may include a microphone 31 and a circuit board 32. For example, the microphone 31 is fastened to the circuit board 32, and the circuit board 32 is disposed on a side that is of the middle frame 1 and that faces away from the display screen 2. It may be considered that the microphone 31 is fastened to the middle frame 1 through the circuit board 32. The microphone 31 may be connected to the mainboard 6 in FIG. 1 through the circuit board 32 to implement signal interaction. Certainly, in the sound pickup module 3, the microphone 31 may alternatively be disposed between the circuit board 32 and the middle frame 1. This is not limited in embodiments of this application.

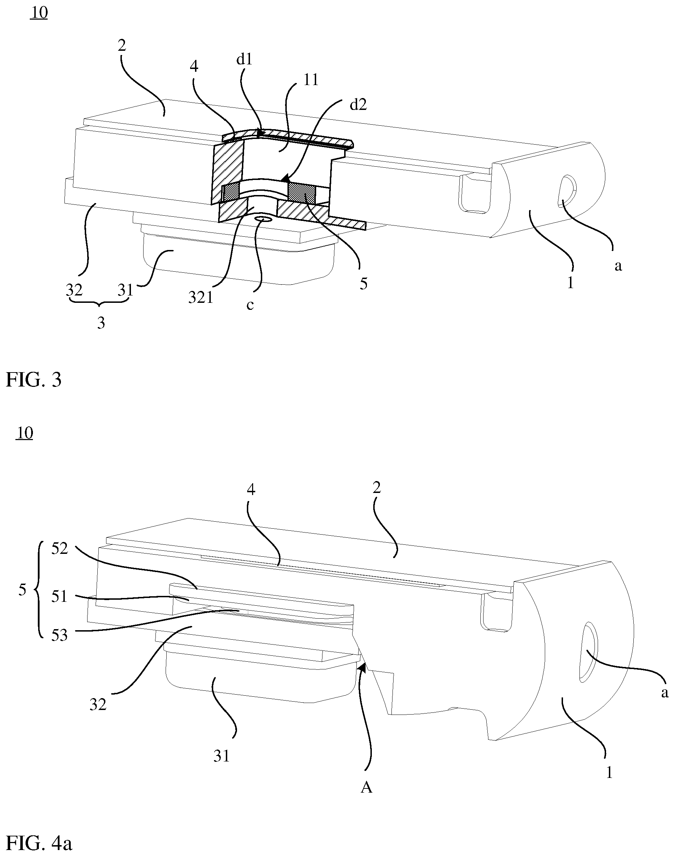

When the terminal device 10 is in use, an external sound may enter the terminal device 10 through the first sound pickup hole a, and is finally acquired by the sound pickup module 3. FIG. 3 is a partially sectional view of the terminal device 10. It can be seen that the middle frame 1 is provided with a first sound pickup channel 11. The first sound pickup channel 11 may be considered as a part of the sound communicating structure T shown in FIG. 1. The first sound pickup channel 11 runs through the middle frame 1 in a thickness direction of the middle frame 1, and the first sound pickup channel 11 is configured to communicate the first sound pickup hole a with the sound pickup module 3 of the terminal device 10. Specifically, the first sound pickup channel 11 has a first port d1 facing the display screen 2 and a second port d2 facing the sound pickup module 3. To seal the first port d1 of the first sound pickup channel 11, the display screen 2 may be sealingly connected to the middle frame 1 by a first sealing assembly 4. To seal the second port d2 of the first sound pickup channel 11 and communicate the microphone 31 of the sound pickup module 3, the circuit board 32 of the sound pickup module 3 may be sealingly connected to the middle frame 1 by a second sealing assembly 5. The circuit board 32 is provided with a first via hole 321 for guiding a sound to the microphone 31. The first via hole 321 corresponds to a second sound pickup hole c of the microphone 31, and an orthographic projection of the first via hole 321 on the microphone 31 covers the second sound pickup hole c of the microphone 31, to ensure no sound loss. To communicate the first sound pickup channel 11 with the second sound pickup hole c of the microphone 31, a channel for sound communicating is also provided on the second sealing assembly 5, which is described in detail below.

In the terminal device 10 shown in FIG. 3, the first sound pickup channel 11 is formed by sealing a combination of the middle frame 1, the first sealing assembly 4, the display screen 2, the second sealing assembly 5, and the sound pickup module 3, so that it can be ensured that there is no sound loss when a sound passes through the first sound pickup channel 11. Based on the formation manner of the first sound pickup channel 11, in the thickness direction of the terminal device 10, a side that is of the first sound pickup channel 11 and that faces the display screen 2 and a side that is of the first sound pickup channel 11 and that faces the sound pickup module 3 do not need to be sealed by the middle frame 1, so that a thickness of the middle frame 1 can be smaller, and more space can be further reserved for assembling another component of the terminal device 10. In other words, in the terminal device 10 including the middle frame 1 with a small thickness, the implementation of the first sound pickup channel 11 provided in embodiments of this application can meet sealing of a sound channel and ensure audio quality.

In some embodiments, FIG. 4a is a diagram of a structure of a part of the terminal device 10. A recess structure A is provided on a side that is of the middle frame 1 and that faces away from the display screen 2, the recess structure A can form accommodation space on the side that is of the middle frame 1 and that faces away from the display screen 2, and the sound pickup module 3 may be disposed in the accommodation space formed by the recess structure A. Because the sound pickup module 3 is at least partially located in the accommodation space formed by the recess structure A, the middle frame 1 can protect the sound pickup module 3, improving reliability of the sound pickup module 3. In addition, space occupied by the sound pickup module 3 can be further saved, more stacking space that is more proper can be reserved for another component of the terminal device 10, optimizing a module form. The second sealing assembly 5 connected between the circuit board 32 in the display module 3 and the middle frame 1 specifically includes a structural member 51, a first sealing member 52, and a second sealing member 53. The structural member 51 is sealingly connected to the middle frame 1 by the first sealing member 52, and the structural member 51 is sealingly connected to the circuit board 32 by the second sealing member 53.

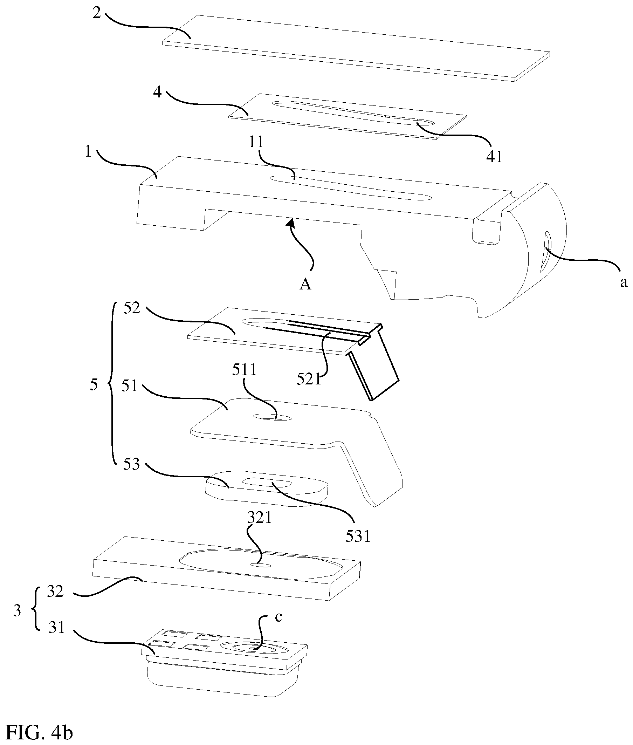

Further, refer to an exploded view of the terminal device 10 shown in FIG. 4b. For example, the first sealing assembly 4 is in a ring shape, and the first sealing assembly 4 is disposed around a port that is of the first sound pickup channel 11 and that faces the display screen 2, so that the first sealing assembly 4 has a second via hole 41 that matches the first sound pickup channel 11. To facilitate sound transmission between the first sound pickup channel 11 and the sound pickup module 3, a sound guiding hole 511 is provided on the structural member 51, a first communicating hole 521 is provided on the first sealing member 52, and a second communicating hole 531 is provided on the second sealing member 53. In the thickness direction of the terminal device 10, any two adjacent structures of the first sound pickup channel 11, the second via hole 41, the first communicating hole 521, the sound guiding hole 511, and the second communicating hole 531 at least partially overlap, so that a sound can be transmitted.

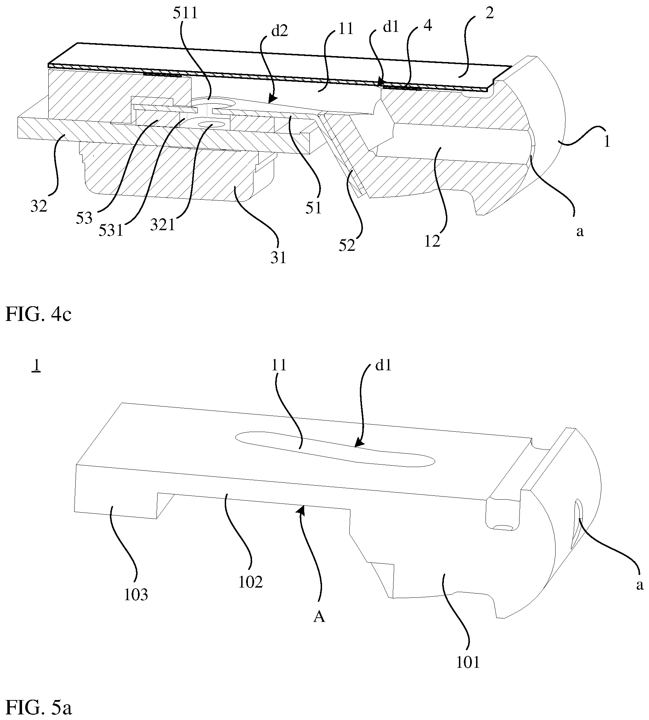

Further, with reference to a sectional view of a structure of a part of the terminal device 10 shown in FIG. 4c, the first sealing assembly 4 can fasten the display screen 2 to an upper surface of the middle frame 1 in a direction shown in the figure, and the display screen 2 can close the first port d1 that is of the first sound pickup channel 11 and that faces the display screen 2. The middle frame 1 is sealingly connected to the circuit board 32 by the second sealing assembly 5, the sound guiding hole 511 is in communication with the first sound pickup channel 11 through the first communicating hole 521, and the sound guiding hole 511 is in communication with the first via hole 321 on the circuit board 32 through the second communicating hole 531, so that the second sound pickup hole c of the microphone 31 can be in communication with the first sound pickup channel 11. In addition, the structural member 51 and the middle frame 1 are sealed by the first sealing member 52, and the structural member 51 and the circuit board 32 are sealed by the second sealing member 53. The middle frame 1 is further provided with a second sound pickup channel 12. One end of the second sound pickup channel 12 is in communication with the first sound pickup channel 11, and the other end is in communication with the first sound pickup hole a, so that a sound entering the first sound pickup hole a can be guided to the first sound pickup channel 11. It may be considered that the second sound pickup channel 12, the first sound pickup channel 11, the first communicating hole 521, the sound guiding hole 511, the second communicating hole 531, and the first via hole 321 are sequentially in communication to form the sound communicating structure T shown in FIG. 1. Specifically, as shown in FIG. 4c, the second sound pickup channel 12 may be disposed to avoid a position of the recess structure A, and a thickness of the middle frame 1 at this position can meet formation and sealing requirements of the second sound pickup channel 12. When the terminal device 10 performs sound recording, an external sound may enter from the first sound pickup hole a, and may be transmitted through the sound communicating structure T to the microphone 31, for the microphone 31 to acquire the sound.

Based on FIG. 4a to FIG. 4c, structures of all parts of the terminal device 10 provided in embodiments of this application are described in detail.

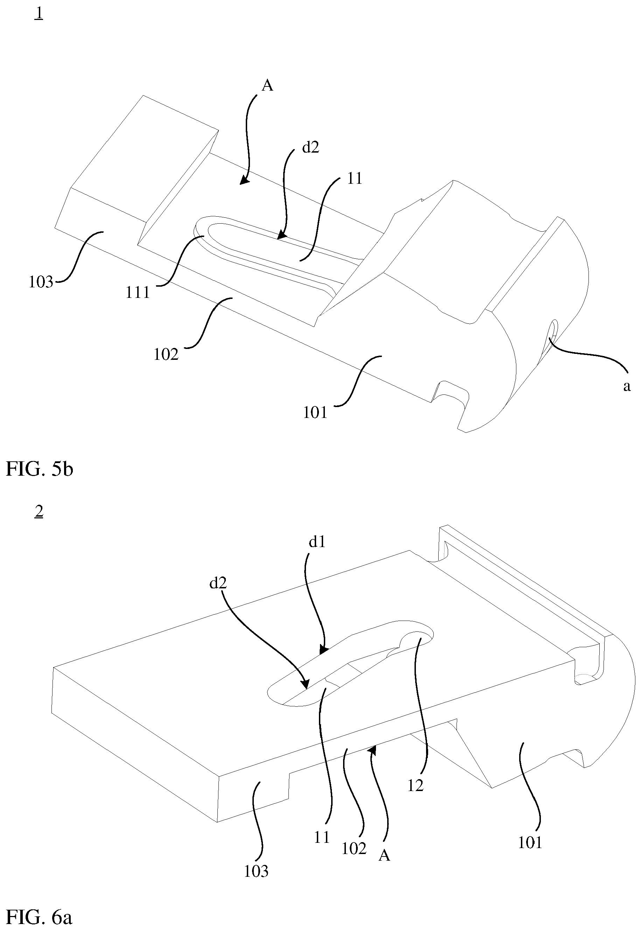

FIG. 5a and FIG. 5b are diagrams of a structure of the middle frame 1 observed from different angles of view. The first sound pickup channel 11 runs through the middle frame 1 in the thickness direction of the middle frame 1. The first sound pickup channel 11 has the first port d1 on a surface that is of the middle frame 1 and that faces the display screen 2. For example, the first port d1 of the first sound pickup channel 11 is in an irregular elongated shape.

A recess structure A is formed on a side that is of the middle frame 1 and that faces away from the display screen 2. It may be considered that the recess structure A divides the middle frame 1 into a first structural portion 101, a second structural portion 102, and a third structural portion 103, thicknesses of the first structural portion 101 and the third structural portion 103 are both greater than a thickness of the second structural portion 102, and an outer surface of the middle frame 1 is located on the first structural portion 101. Surfaces that are of the first structural portion 101, the second structural portion 102, and the third structural portion 103 and that face the display screen 2 are kept flush, and surfaces that are of the first structural portion 101, the second structural portion 102, and the third structural portion 103 and that face away from the display screen 2 are not coplanar. A surface that is of the first structural portion 101 and that faces the third structural portion 103, a surface that is of the second structural portion 102 and that faces away from the display screen 2, and a surface that is of the third structural portion 103 and that faces the first structural portion 101 form an inner surface of the recess structure A. It may be considered that the surface that is of the second structural portion 102 and that faces away from the display screen 2 is a recess bottom of the recess structure A, and the surface that is of the first structural portion 101 and that faces the third structural portion 103 and the surface that is of the third structural portion 103 and that faces the first structural portion 101 are respectively two recess walls of the recess structure A. For example, the surface that is of the first structural portion 101 and that faces the third structural portion 103 is an oblique surface, which facilitates processing. The second port d2 of the first sound pickup channel 11 on the middle frame 1 is at least partially located in the recess structure A, and may be specifically located on a surface that is of the second structural portion 102 and that faces away from the display screen 2. It may be considered that a thickness at the recess structure A of the middle frame 1 is not sufficient to provide a sealed sound pickup channel. In this case, the first sound pickup channel 11 runs through the middle frame 1, the first port d1 of the first sound pickup channel 11 is sealed by the display screen 2, and the second port d2 and the sound pickup module 3 are sealed and in communication by the second sealing assembly 5, which meets an audio quality requirement.

Further as shown in FIG. 5b, a flange 111 is further formed on a side of the recess structure A of the middle frame 1, and the flange 111 extends along an edge of the second port d2 and protrudes from a surface that is of the second structural portion 102 and that faces away from the display screen 2. The flange 111 can act as a reinforcing rib, improving structural strength at the second port d2 of the first sound pickup channel 11.

It can be learned that, due to the recess structure A, some space is reserved on a side that is of the middle frame 1 and that faces away from the display screen 2. The sound pickup module 3 may be disposed in the recess structure A, so that mounting space is reserved for other components, reducing space occupied by these components in the thickness direction of the terminal device 10, thereby further reducing a thickness of the terminal device 10.

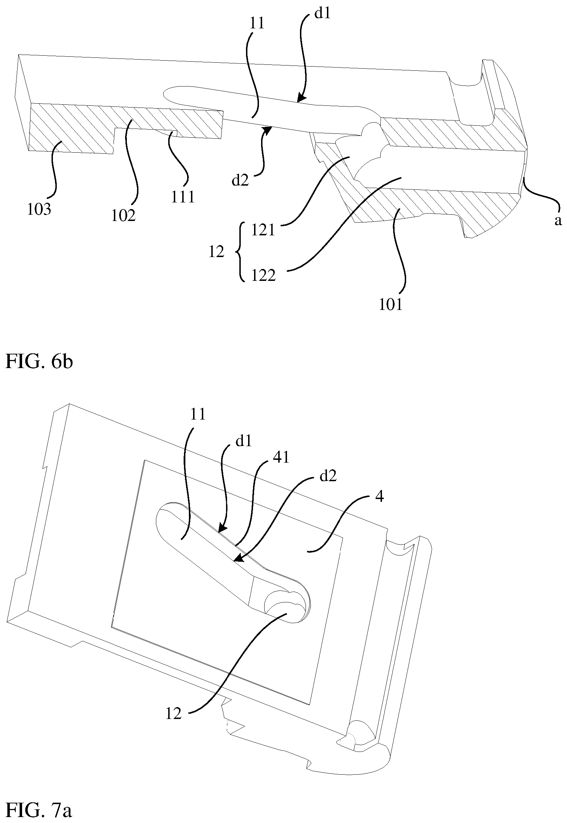

As shown in FIG. 6a, when the middle frame 1 is observed from another angle of view, it can be seen that the second sound pickup channel 12 is provided in the first structural portion 101 of the middle frame 1, and the second sound pickup channel 12 can communicate the first sound pickup channel 11 with the first sound pickup hole a. Specifically, refer to the sectional view of a structure of the middle frame 1 shown in FIG. 6b. As shown in FIG. 6b, the first sound pickup channel 11 is located at the second structural portion 102, and the second sound pickup channel 12 is provided at the first structural portion 101 of the middle frame 1. A thickness of the first structural portion 101 is greater than a thickness of the second structural portion 102. The second sound pickup channel 12 may be formed at the first structural portion 101 by drilling or in another manner. It may be considered that sealing of the second sound pickup channel 12 can be implemented in the thickness direction of the middle frame 1 by the first structural portion 101. It can be seen from FIG. 6a and FIG. 6b that a size of the first port d1 of the first sound pickup channel 11 is greater than a size of the second port d2.

To communicate with the first sound pickup channel 11, the second sound pickup channel 12 may include a first channel segment 121 and a second channel segment 122. The first channel segment 121 is in communication between the first sound pickup channel 11 and the second channel segment 122, and the second channel segment 122 is in communication with the first sound pickup hole a. The first sound pickup hole a is located at an approximately middle position on an outer surface of the middle frame 1, and the second channel segment 122 is also located at a middle position of the first structural portion 101 in a thickness direction. A position of the first sound pickup channel 11 is on a side that is of the middle frame 1 and that faces the display screen 2. The first channel segment 121 herein is provided obliquely to communicate the first sound pickup channel 11 with the second channel segment 122.

Based on the middle frame 1 shown in FIG. 6a and FIG. 6b, FIG. 7a shows an example of a fitting structure between the first sealing assembly 4 and the middle frame 1. The first sealing assembly 4 is disposed on a surface that is of the middle frame 1 and that faces the display screen 2, and an orthographic projection of an outer edge of the first sealing assembly 4 on the middle frame 1 surrounds the first port d1, so that the display screen 2 can be sealingly connected to the middle frame 1 by the first sealing assembly 4. Herein, the outer edge of the first sealing assembly 4 is in a rectangular shape. The second via hole 41 of the first sealing assembly 4 matches the first port d1 of the first sound pickup channel 11. Certainly, a size relationship between the second via hole 41 and the first port d1 may not be limited. It may be considered that the first port d1 of the first sound pickup channel 11 may be closed by the display screen 2. It should be understood that the first sealing assembly 4 may alternatively have no second via hole 41. When the first sealing assembly 4 is not provided with the second via hole 41, the display screen 2 is sealingly connected to the middle frame 1 by the first sealing assembly 4. In another aspect, it may be considered that the first sealing assembly 4 closes the first port d1. Herein, the first sealing assembly 4 may be specifically an adhesive, that is, the display screen 2 may be bonded to the middle frame 1 by using the adhesive.

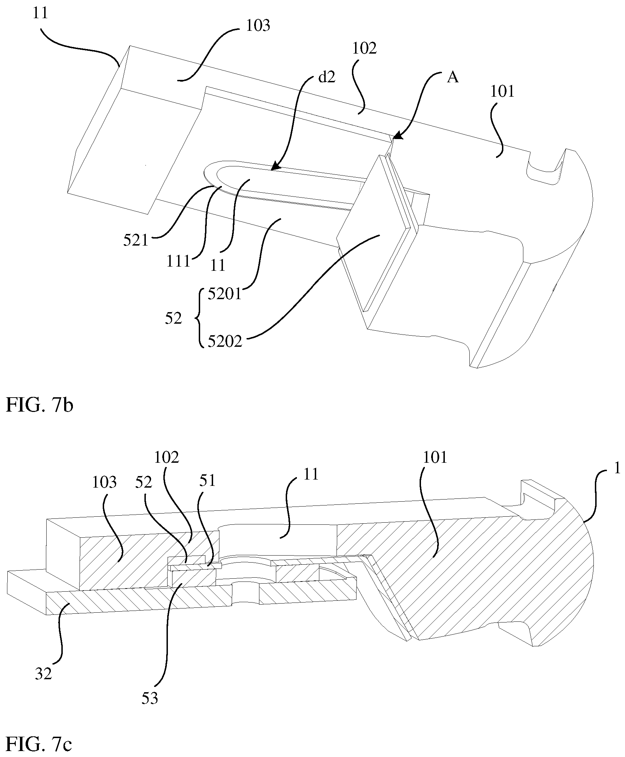

Based on the middle frame 1 shown in FIG. 6a and FIG. 6b, FIG. 7b shows an example of a fitting structure between the first sealing member 52 and the middle frame 1. The first sealing member 52 is disposed on a side that is of the middle frame 1 and that faces away from the display screen 2. To fit the recess structure A, the first sealing member 52 includes a bottom portion 5201 and a side portion 5202. The bottom portion 5201 is located on a side of a recess bottom of the recess structure A, and the recess bottom of the recess structure A is a surface that is of the second structural portion 102 and that faces away from the display screen 2. The first sound pickup channel 11 extends toward the first structural portion 101. In this case, the side portion 5202 is located on a side of a recess wall that is of the recess structure A and that faces the first structural portion 101. An orthographic projection of an edge of the first sealing member 52 on the middle frame 1 needs to surround at least the second port d2 of the first sound pickup channel 11, so that the first sealing member 52 can sealingly connect the structural member 51 to the middle frame 1. In the thickness direction of the terminal device 10, an orthographic projection of the first communicating hole 521 of the first sealing member 52 on the middle frame 1 and the second port d2 of the first sound pickup channel 11 at least partially overlap, to ensure sound passage. Herein, the first communicating hole 521 on the first sealing member 52 may match an outer edge of the flange 111 on the middle frame 1, so that the first sealing member 52 can sealingly connect the middle frame 1 to the structural member 51. For example, the first communicating hole 521 is formed on the bottom portion 5201, and an edge that is of the first communicating hole 521 and that faces the side portion 5202 is in contact with the recess wall. With reference to FIG. 4b, it can be learned that a shape of the structural member 51 matches a shape of the first sealing member 52, and the first sealing member 52 can fasten the structural member 51 to the recess structure A.

Herein, a material of the structural member 51 may be a metal. For example, the structural member 51 is a steel sheet. Such structural member 51 has high strength and ductility, providing better strength and support for the terminal device 10. The first sealing member 52 may be specifically an adhesive, that is, the structural member 51 may be bonded to the middle frame 1 by using the adhesive. It should be understood that a structure of the first sealing member 52 and a shape of the first communicating hole 521 are not limited in this application, as long as the structural member 51 can be sealingly connected to the middle frame 1.

FIG. 7c shows a structure in which the middle frame 1 is sealingly connected to the circuit board 32 by the second sealing assembly 5. The circuit board 32 may be fastened to a surface that is of the third structural portion 103 and that faces away from the display screen 2. Mounting space is formed between the circuit board 32 and a surface that is of the first structural portion 101 and that faces away from the display screen 2. The second sealing member 53, a part of the structural member 51, and a part of the first sealing member 52 are sequentially stacked in the mounting space. The structural member 51 is fastened to the middle frame 1 by the first sealing member 52, and the second sealing member 53 is connected between the structural member 51 and the circuit board 32. For example, the second sealing member 53 includes an elastic sealing ring, and the second sealing member 53 may be connected between the structural member 51 and the circuit board 32.

Possibly, two surfaces of the second sealing member 53 in a thickness direction may be respectively bonded to the structural member 51 and the circuit board 32. Because the second sealing member 53 is made of an elastic material, during mounting, the second sealing member 53 may be disposed between the structural member 51 and the circuit board 32 in an interference manner. In this case, the second sealing member 53 can abut against the structural member 51 and the circuit board 32. In other words, there is a force between the second sealing member 53 and the structural member 51, and there is also a force between the second sealing member 53 and the circuit board 32, further enhancing sealing effect. In addition, the second sealing member 53 made of an elastic material can further absorb an impact wave when the terminal device 10 is impacted, to provide structural buffering, thereby protecting the microphone 31 in the sound pickup module 3, and reducing a risk of damage to the microphone 31 caused by vibration. Specifically, a material of the second sealing member 53 may be silica gel, foam, or rubber.

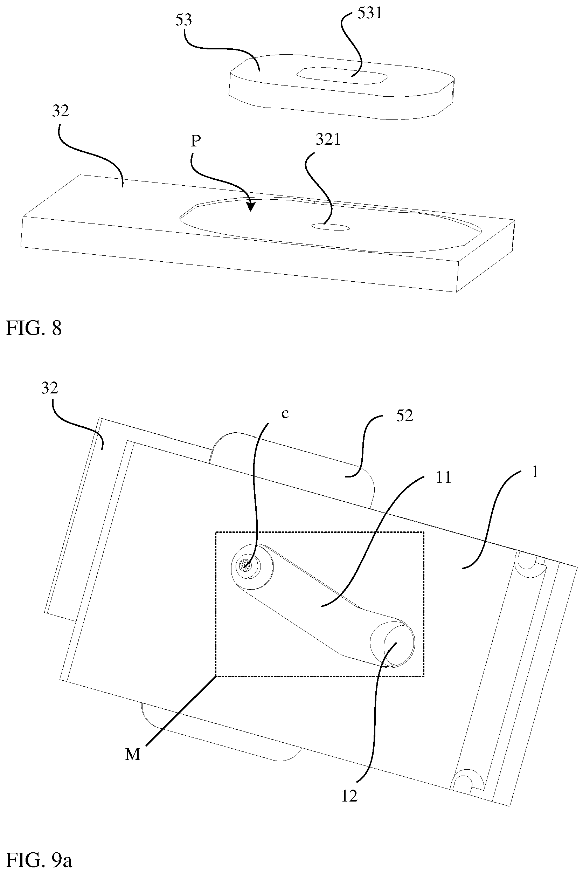

FIG. 8 shows a fitting relationship between the circuit board 32 and the second sealing member 53. A coordination recess P is formed on a surface of a side that is of the circuit board 32 and that faces the second sealing member 53, and a first via hole 321 is located in the coordination recess P. A size of the coordination recess P matches a size of the second sealing member 53. When the second sealing member 53 cooperates with the circuit board 32, a side that is of the second sealing member 53 and that faces the circuit board 32 may be accommodated in the coordination recess P. The coordination recess P can provide a specific limiting function for the second sealing member 53, and can also ensure communication effect between the second communicating hole 531 and the first via hole 321.

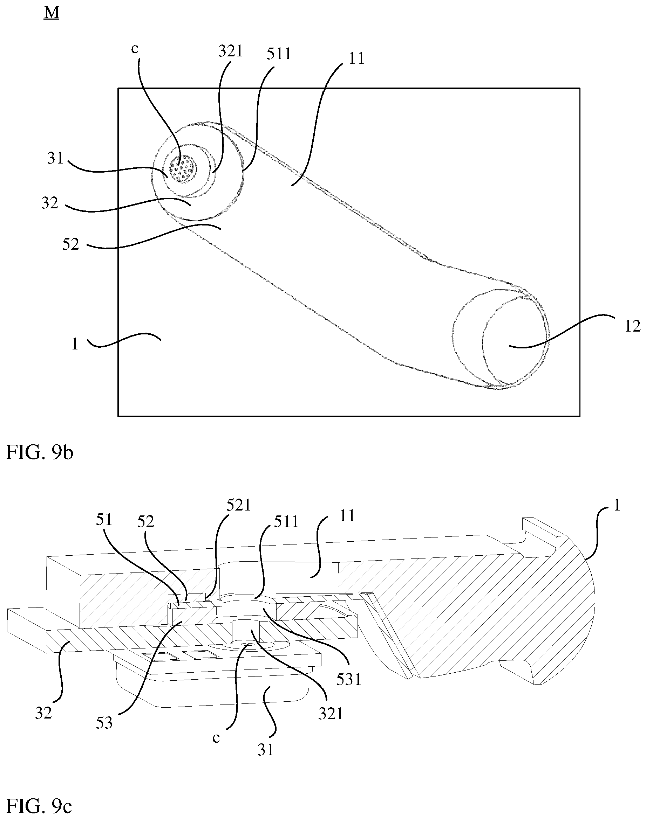

Refer to FIG. 9a. As observed from a side of the middle frame 1 in the thickness direction of the terminal device 10, a cross-sectional area of the second sound pickup hole c is less than a cross-sectional area of the first sound pickup channel 11. A part M in FIG. 9a is enlarged to obtain a structure shown in FIG. 9b. After entering the second sound pickup channel 12 and the first sound pickup channel 11 through the first sound pickup hole a, an external sound can be transmitted to the second sound pickup hole c through a structure between the microphone 31 and the middle frame 1, ensuring that the second sound pickup hole c can fully and completely receive the sound. With reference to the structure shown in FIG. 7c, between the second sound pickup hole c of the microphone 31 and the first sound pickup channel 11, the circuit board 32, the second sealing member 53, the structural member 51, and the first sealing member 52 are sealingly connected in sequence, so that the middle frame 1 can be sealingly connected to the microphone 31. The first via hole 321 on the circuit board 32, the second communicating hole 531 on the second sealing member 53, the sound guiding hole 511 on the structural member 51, and the first communicating hole 521 on the first sealing member 52 are sequentially in communication, so that the first sound pickup channel 11 can be in communication with the second sound pickup hole c. A direction of the first sound pickup channel 11 on the middle frame 1 is not limited, as long as the sound guiding hole 511 can be in communication with the second sound pickup channel 12.

In FIG. 9b, due to a limited angle of view, only the via hole 321 on the circuit board 32 and the sound guiding hole 511 on the structural member 51 can be observed. To more clearly observe a communication structure between the middle frame 1 and the second sound pickup hole c, further refer to the sectional view of a structure of a part of the terminal device 10 shown in FIG. 9c. As shown in FIG. 9c, in the thickness direction of the terminal device 10, orthographic projections of the via hole 321, the second communicating hole 531, the sound guiding hole 511, and the first communicating hole 521 on the microphone 31 all cover the second sound pickup hole c, to ensure that a sound can be fully transmitted to the second sound pickup hole c to be acquired by the second sound pickup hole c. Specifically, an orthographic projection of the sound guiding hole 511 on the first sealing member 52 and the first communicating hole 521 at least partially overlap. For example, the orthographic projection of the sound guiding hole 511 on the first sealing member 52 is located within a region of the first communicating hole 521. An orthographic projection of the sound guiding hole 511 on the second sealing member 53 and the second communicating hole 531 at least partially overlap. For example, the orthographic projection of the sound guiding hole 511 on the second sealing member 53 is located within a region of the second communicating hole 531. For example, the second sound pickup hole c, the first via hole 321, and the sound guiding hole 511 are all circular, and axes of the holes are collinear.

In conclusion, in the terminal device 10 provided in embodiments of this application, the first sound pickup channel 11 is a part of a sound pickup channel between the sound pickup module 3 and the first sound pickup hole a. The first sound pickup channel 11 runs through the middle frame 1 in the thickness direction of the middle frame 1, and the first sound pickup channel 11 is sealed in the thickness direction by sealingly connecting the display screen 2 to the middle frame 1 and sealingly connecting the sound pickup module 3 to the middle frame 1, so that no sound leakage occurs during sound transmission, ensuring audio quality. Such implementation of the first sound pickup channel 11 is applicable to a thin middle frame 1, making audio quality and thinning of a terminal device 10 compatible, which has a good application prospect. In some experimental measurements, a thickness of the middle frame 1 of the terminal device 10 provided in embodiments of this application can be reduced by about 0.5 mm compared with a thickness of a middle frame in the conventional technology. For an increasingly miniaturized terminal device 10, when a thickness of the middle frame 1 is reduced, a designer can provide more proper stacking space for the terminal device 10 in the thickness direction, which is also conducive to designing a more optimized form of a sound pickup module.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A terminal device (10), comprising a middle frame (1), a display screen (2), and a sound pickup module (3), wherein the display screen (2) and the sound pickup module (3) are disposed respectively on both sides of the middle frame (1) in a thickness direction;
the middle frame (1) is provided with a first sound pickup channel (11); the first sound pickup channel (11) runs through the middle frame (1) in the thickness direction of the middle frame (1); the first sound pickup channel (11) has a first port (d1) facing the display screen (2) and a second port (d2) facing the sound pickup module (3);
an outer surface of the terminal device (10) comprises a first sound pickup hole (a), and the first sound pickup hole (a) is in communication with the first sound pickup channel (11);
the display screen (2) is sealingly connected to the middle frame (1) by a first sealing assembly (4) to seal the first port (d1) of the sound pickup channel (11); and
the sound pickup module (3) is sealingly connected to the middle frame (1) by a second sealing assembly (5), and the second sealing assembly (5) communicates a second sound pickup hole (c) of the sound pickup module (3) with the second port (d2) of the first sound pickup channel (11).

2. The terminal device (10) according to claim 1, wherein the second sealing assembly (5) comprises a structural member (51), a first sealing member (52), and a second sealing member (53);
the structural member (51) is provided with a sound guiding hole (511);
the structural member (51) is sealingly connected to the middle frame (1) by the first sealing member (52), the first sealing member (52) is provided with a first communicating hole (521), and the first communicating hole (521) communicates the sound guiding hole (511) with the second port (d2) of the first sound pickup channel (11); and
the structural member (51) is sealingly connected to the sound pickup module (3) by the second sealing member (53), the second sealing member (53) is provided with a second communicating hole (531), and the second communicating hole (531) communicates the sound guiding hole (511) with the second sound pickup hole (c) of the sound pickup module (3).

3. The terminal device (10) according to claim 2, wherein an orthographic projection of an outer edge of the first sealing member (52) on the middle frame (1) surrounds the second port of the first sound pickup channel (11).

4. The terminal device (10) according to claim 2 or 3, wherein in a thickness direction of the terminal device (10), an orthographic projection of the first communicating hole (521) on the middle frame (1) and the second port (d2) of the first sound pickup channel (11) at least partially overlap.

5. The terminal device (10) according to any one of claims 2 to 4, wherein in the thickness direction of the terminal device (10), an orthographic projection of the second communicating hole (531) on the sound pickup module (3) covers the second sound pickup hole of the sound pickup module (3).

6. The terminal device (10) according to any one of claims 2 to 5, wherein in the thickness direction of the terminal device (10), an orthographic projection of the sound guiding hole (511) on the first sealing member (52) and the first communicating hole (521) at least partially overlap, and an orthographic projection of the sound guiding hole (511) on the second sealing member (53) and the second communicating hole (531) at least partially overlap.

7. The terminal device (10) according to any one of claims 2 to 6, wherein the first sealing member (52) comprises a bonding adhesive, and a surface that is of the structural member (51) and that faces the middle frame (1) is bonded to the middle frame (1) by using the bonding adhesive.

8. The terminal device (10) according to any one of claims 2 to 7, wherein the second sealing member (53) comprises an elastic sealing ring; and in the thickness direction of the terminal device (10), both ends of the elastic sealing ring respectively abut against the structural member (51) and the sound pickup module (3).

9. The terminal device (10) according to claim 8, wherein a material of the elastic sealing ring is silica gel, foam, or rubber.

10. The terminal device (10) according to any one of claims 1 to 9, wherein a cross-sectional area of the second port of the first sound pickup channel (11) is greater than a cross-sectional area of the second sound pickup hole of the sound pickup module (3).

11. The terminal device (10) according to any one of claims 1 to 10, wherein an orthographic projection of an outer edge of the first sealing assembly (4) on the middle frame (1) surrounds the first port of the first sound pickup channel (11).

12. The terminal device (10) according to any one of claims 1 to 11, wherein the first sealing assembly (4) comprises a bonding adhesive, and a surface that is of the display screen (2) and that faces the middle frame (1) is bonded to the middle frame (1) by using the bonding adhesive.

13. The terminal device (10) according to any one of claims 1 to 12, wherein a recess structure (A) is formed on a side that is of the middle frame (1) and that faces away from the display screen (2), and a recess opening of the recess structure (A) is located on a surface that is of the middle frame (1) and that faces away from the display screen (2); and a distance between a recess bottom of the recess structure (A) and a surface that is of the middle frame (1) and that faces the display screen (2) is less than a thickness of the middle frame (1); and
the sound pickup module (3) is disposed in the recess structure (A), and the second port of the first sound pickup channel (11) is at least partially located in the recess structure (A).

14. The terminal device (10) according to any one of claims 1 to 13, wherein the middle frame (1) is provided with a second sound pickup channel (12), and the second sound pickup channel (12) is in communication between the first sound pickup channel (11) and the first sound pickup hole (a).

15. The terminal device (10) according to claim 14, wherein the second sound pickup channel (12) comprises a first channel segment (121) and a second channel segment (122) that are in communication, and the second channel segment (122) is connected between the first channel segment (121) and the first sound pickup hole (a); and the first channel segment (121) is provided obliquely to communicate the first sound pickup channel (11) with the second channel segment (122).

16. The terminal device (10) according to any one of claims 1 to 15, wherein the sound pickup module (3) comprises a microphone (31) and a circuit board (32); and the circuit board (32) is fastened to the middle frame (1), the microphone (31) is disposed on a side that is of the circuit board (32) and that faces away from the middle frame (1), and the second sound pickup hole (c) is provided on the microphone (31); and
the circuit board (32) is provided with a first via hole (321), and the via hole (321) is configured to communicate the second sound pickup hole of the microphone (31) with the second port of the first sound pickup channel (11).
